# EUROPEAN PATENT APPLICATION

(11) **EP 3 260 312 A1**
(43) Date of publication of application: **27.12.2017**
(21) Application number: 17176609.0
(22) Date of filing: 19.06.2017
(51) Int. Cl.: B60C 23/12, B60C 29/06

(54) **AIR MAINTENANCE TIRE SYSTEM COMPRISING A COMPONENT PROTECTOR**

(30) Priority: 20.06.2016 US 201615186841
(71) Applicant: The Goodyear Tire & Rubber Company, Akron, OH 44316 (US)
(72) Inventor: BAFANA, Sagar Dilip, Akron, OH Ohio 44321 (US); LAMGADAY, Robin, Wadsworth, OH Ohio 44281 (US); LIN, Cheng-Hsiung, Hudson, OH Ohio 44236 (US)
(74) Representative: Kutsch, Bernd

(57) **Abstract**

An air maintenance tire system comprising a protector is disclosed. The air maintenance tire system includes at least one connecting tube (22) extending between and being in fluid communication with an annular air tube (20) and a valve housing (26). The protector (10) comprises a first end (40) disposed proximate the connection of the at least one connecting tube (22) to the annular tube (20); a second end (42) disposed proximate the valve housing (26); and a mid-portion (44) disposed between the first and second ends (40, 42), whereby the protector (10) covers an outboard surface of the at least one connecting tube (22).

## Description

### Field of the Invention

The invention relates to air maintenance tire systems, which are systems that maintain appropriate air pressure within a pneumatic tire. More specifically, the invention relates to a protector for components of the air maintenance tire system, preferably a valve stem-based air maintenance tire system.

### Background of the Invention

Conventional pneumatic tires are designed to perform for relatively long periods of time. In many cases, automobile tires are now expected to have a useful service life of 45,000, 70,000, or 100,000 km. However, even long-life pneumatic tires are subject to air pressure losses due to puncture by nails and other sharp objects, temperature changes, and/or diffusion of air through the tire itself.

Since air diffusion reduces tire pressure over time, the pneumatic tires may repeatedly become underinflated. Accordingly, drivers must in turn repeatedly act to maintain recommended air pressures in the vehicle tires to avoid reduced fuel economy, tire life, and/or vehicle braking and handling performance. Tire pressure monitoring systems (TPMS) are automated systems that have been proposed to warn drivers when the air pressure in the vehicle tires is significantly low. Such systems, however, remain dependent upon a driver taking remedial action, when warned, to re-inflate a tire to the recommended pressure. It had thus been desirable in the prior art to incorporate an air maintenance feature within a pneumatic tire that would maintain a predetermined or recommended air pressure without requiring driver intervention.

To this end, air maintenance tire (AMT) systems have been developed. An AMT system typically includes one or more pumps or pumping assemblies that act to increase the air pressure in the vehicle tires as needed. An example of one such system is a valve stem-based air maintenance tire system described in U.S. Patent Application Serial No. 15/065,134.

In such air maintenance tire systems, and particularly valve stem-based air maintenance tire systems, certain components of the systems may be exposed to road debris and environmental conditions. For example, a valve stem-based air maintenance tire system may employ air tubes that extend between a valve housing and a peristaltic pump tube. Such air tubes may be disposed on the outboard surface of the wheel rim and/or tire, where they are exposed to road debris and environmental conditions.

It is therefore desirable to provide a protector that shields and protects such components of an air maintenance tire system, preferably a valve stem-based air maintenance tire system from potential damage.

### Summary of the Invention

The invention relates to a system in accordance with claim 1.

Dependent claims refer to preferred embodiments of the invention.

According to a preferred aspect of an exemplary embodiment of the invention, an air maintenance tire system includes at least one connecting tube extending between and being in fluid communication with an annular air tube and a valve housing. The protector includes a first end disposed proximate the connection of the at least one connecting tube to the annular tube, and a second end disposed proximate the valve housing. A mid-portion of the protector is disposed between the first and second ends, in which the protector covers an outboard surface of the at least one connecting tube.

### Brief Description of the Drawings

The invention will be described by way of example and with reference to the accompanying drawings, in which:
Figure 1 is a fragmentary elevational view of an outboard side of a tire including components of a valve stem-based air maintenance tire system;
Figure 2 is a fragmentary elevational view of an outboard side of a tire including components of a valve stem-based air maintenance tire system and an exemplary embodiment of an air maintenance tire system component protector of the present invention;
Figure 3 is a perspective view of the air maintenance tire system component protector shown in Figure 2;
Figure 4 is a fragmentary perspective view of a portion of the air maintenance tire system component protector shown in Figure 2; and
Figure 5 is a fragmentary perspective view of another portion of the air maintenance tire system component protector shown in Figure 2.

Similar numerals refer to similar parts throughout the drawings.

### Detailed Description of Example Embodiments of the Invention

It is to be understood that the term inboard is referred to herein as a direction corresponding to the axially inner surface or side of a tire, and the term outboard is referred to herein as a direction corresponding to the axially outer surface or side of a tire. The term axially inwardly refers to an axial direction that is toward the center plane of a tire, and the term axially outwardly refers to an axial direction that is away from the center plane of a tire. The term radially inwardly refers to a radial direction that is toward the central axis of rotation of a tire, and the term radially outwardly refers to a radial direction that is away from the central axis of rotation of a tire.

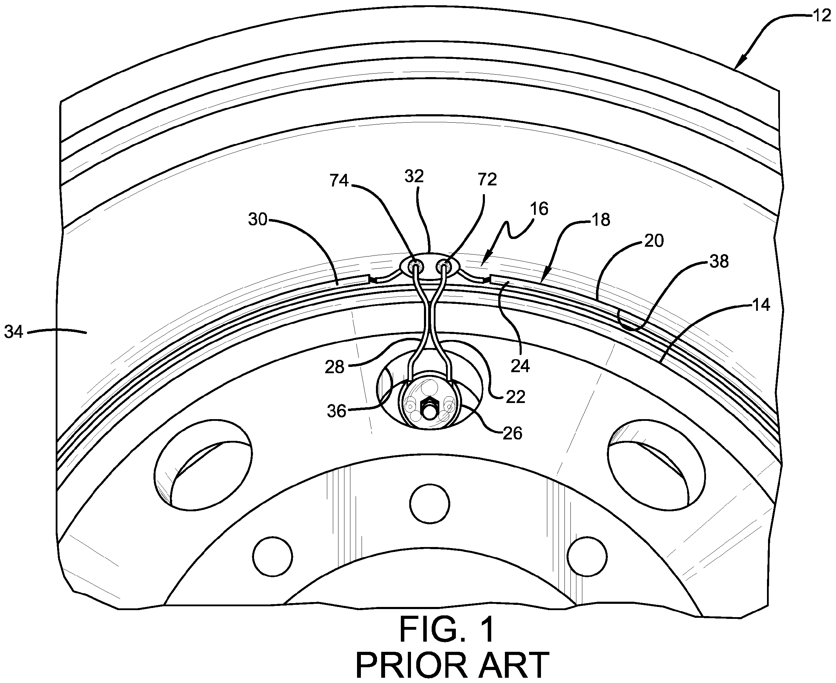

Turning to Figure 1, a tire 12 is mounted on a rim 14 in a conventional manner as known to those skilled in the art and defines a cavity (not shown). An exemplary air maintenance tire system, such as a valve stem-based air maintenance tire system, is indicated at 16. The air maintenance tire system 16 includes a peristaltic pump assembly 18. The peristaltic pump assembly 18 includes an annular air tube or passageway 20 that is received in a preferably annular groove 38 formed in the tire 12 and/or rim 14, and in turn encloses an annular passageway (not shown).

A first connecting tube 22 attaches to a first end 24 of the annular air tube 20 and fluidly connects the first end of the annular air tube to a valve housing 26 of the pump assembly 18. A second connecting tube 28 attaches to a second end 30 of the annular air tube 20 and fluidly connects the second end of the annular air tube to the valve housing 26.

When the tire 12 rotates under load along a ground surface, the annular air tube 20 is sequentially flattened or squeezed at the tire footprint. The sequential flattening of the annular air tube 20 and its passageway, segment by segment, directs air to the valve housing 26. A tire valve stem (not shown), including a check valve, is fluidly connected to the valve housing 26. When the air pressure is sufficient against the check valve and the air pressure within the tire cavity is below a set pressure level, air passes into the tire cavity. When the air pressure level within the tire cavity is at or above the set pressure, the check valve closes and air from the pump assembly 18 is vented by a relief valve in the valve housing 26 to atmosphere.

As seen in Figure 1, the valve housing 26 of the pump assembly 18 is disposed within the rim 14. The connecting tubes 22, 28 pass through an opening 36 formed in the rim 14 and extend to a fairly rigid elastomer or polymer mounting member 32, which is referred to as a dome. The dome 32 is secured to a sidewall 34 of the tire 12, and facilitates the fluid connection of the first connecting tube 22 to the first end 24 of the annular air tube 20 via a first fitting 72 and the fluid connection of the second connecting tube 28 to the second end 30 of the annular air tube via a second fitting 74. The first and second connecting tubes 22 and 28 thus are disposed on the outboard surface of the tire 12 and the rim 14, where they are exposed to potentially damaging road debris and environmental conditions.

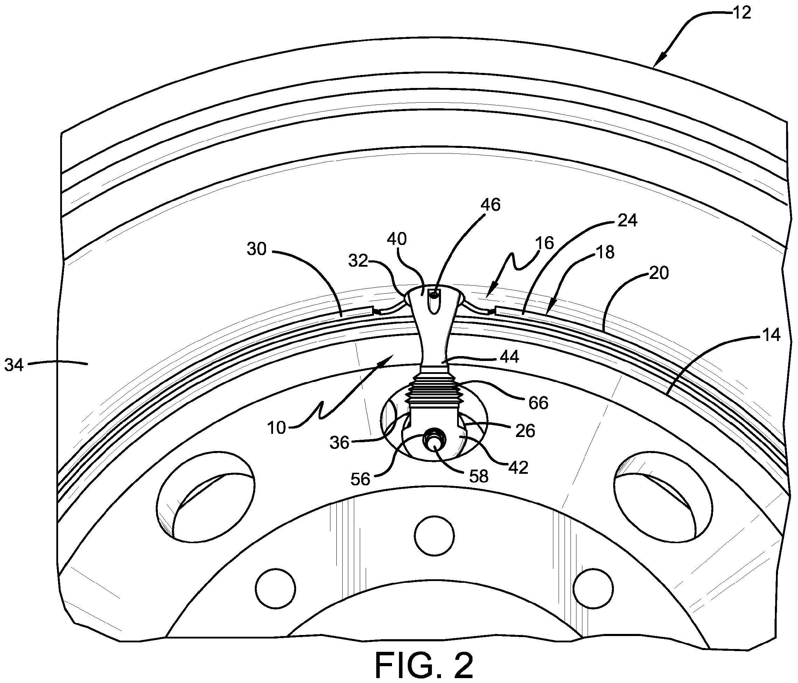

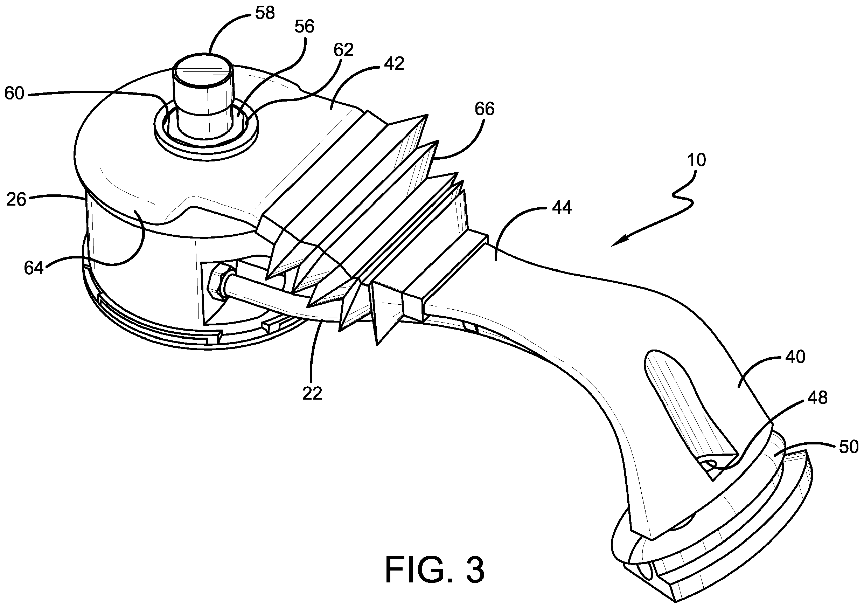

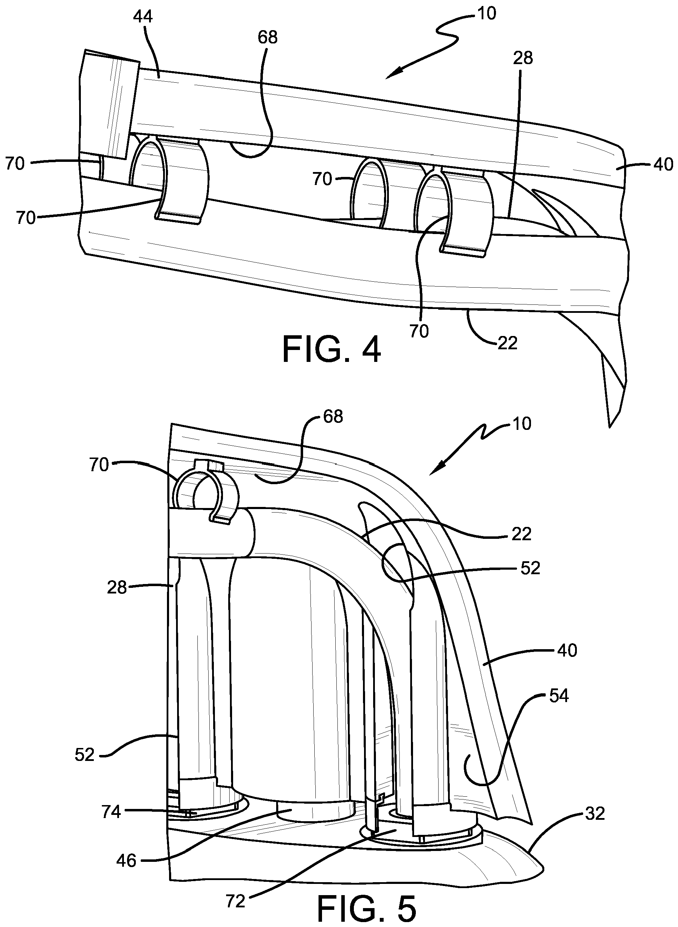

With reference now to Figures 2 through 5, an exemplary embodiment of an air maintenance tire system component protector of the present invention is indicated generally at 10. The protector 10 extends radially from the valve housing 26 to the dome 32 to engage and cover the connecting tubes 22 and 28 to protect them. The connecting tubes 22 and 28 typically are formed of a polymer, such as a flexible plastic, to enable the tubes to flex as the tire 12 undergoes cyclic deflection during rotation. As will be described in greater detail below, the protector 10 thus includes a structure that enables it to flex, while remaining stable to provide secure protection for the tubes 22 and 28.

The protector 10 includes a first end 40, a second end 42 and a mid-portion 44 disposed between the first and second ends. The first end 40 of the protector 10 provides rigid support and a secure connection of the protector to the dome 32. More particularly, the first end 40 is curved axially inboardly relative to the remainder of the protector 10 to provide a stable mounting platform against the dome 40. Preferably, the first end 40 is secured to the dome 32 by a mechanical fastener, such as a screw 46. For example, an opening 48 may be formed in the first end 40 of the protector 10, which aligns with the dome 32 in between the connecting tubes 22 and 28, thereby enabling the screw 46 to be secured to a solid area of the dome without adversely affecting the fluid connection of each respective connecting tube to the annular tube 20.

The first end 40 of the protector 10 also preferably includes a boot 50. The boot 50 is formed of an elastomeric material, and covers the connection of each connecting tube 22 and 28 to the respective fittings 72 and 74 at the dome 32, which reinforces these connections. In addition, the boot 50 optionally contacts and seats on the dome 32 to enable the protector 10 to be supported by the dome. The first end 40 of the protector 10 also includes a pair of slots 52 that are formed in a radially inward surface 54 of the protector first end. Preferably, each of the connecting tubes 22 and 28 snap into a respective one of the slots 52, enabling the first end 40 of the protector 10 to support the connecting tubes adjacent the dome 32. Such support enables the protector 10 to maintain a straight connection of each connecting tube 22 and 28 to the dome 32 to reduce any potential stress in the tubes, reduce abrasion of the tubes with other components such as connecting screws and improve the fatigue behavior of the tubes, all which desirably increase the life of the tubes.

The second end 42 of the protector 10 provides rigid support and a secure connection of the protector to the valve housing 26. More particularly, the valve housing 26 typically includes a nut 56 on its outboard surface that threads onto a bolt 58 of the valve housing. An opening 60 is formed in the second end 42 of the protector 10, which enables the bolt 58 to pass through the protector 10. A lip 62 is formed on the inner circumference of the opening 60, and the nut 56 engages the lip to secure the second end 42 of the protector 10 to the outboard surface of the valve housing 26. The second end 42 of the protector 10 preferably is also formed with a rounded edge 64 that curves axially inboardly to surround the radially inward perimeter edge of the outboard surface of the valve housing 26, thereby providing increased protection of the valve housing.

The protector 10 is formed with a taper extending from the first end 40 to the mid-portion 44, and with a taper extending from the second end 42 to the mid-portion 44. As a result, the mid-portion 44 preferably is thinner than the first end 40 and the second end 42. The mid-portion includes a flexible member 66, such as a bellows. The bellows 66 may be a discrete member formed of a flexible material such as an elastomer, or it may be an integrated flexible feature formed in the mid-portion 44 of the connector 10.

The flexible member 66 enables the protector 10 to flex along three planes of motion. Specifically, if the valve housing 26 has shifted circumferentially relative to the dome 32 and the valve housing and dome are thus misaligned, the flexible member 66 still enables a secure connection of the protector first end 40 to the dome and the second end 42 to the valve housing. If the valve housing 26 has shifted axially inboardly or axially outboardly relative to the dome 32, the flexible member 66 again enables a secure connection of the protector first end 40 to the dome and the second end 42 to the valve housing. Finally, as the tire 12 rotates and experiences cyclic deflection, the radial distance between the dome 32 and the valve housing 26 may change by up to about five (5) or six (6) millimeters. The flexible member 66 readily absorbs and thus accommodates such a change in radial distance, thereby maintaining a secure connection of the protector first end 40 to the dome 32 and the second end 42 to the valve housing 26.

The protector 10 includes one or more pairs of connectors or clips 70 that are attached to an axially inboard surface 68 of the protector. The connectors or clips 70 snap onto and engage the connecting tubes 22 and 28 to retain the tubes adjacent the inboard surface 68 of the protector 10. The connectors 70 thus keep the connecting tubes 22 and 28 in a protected location, and by anchoring them to the protector 10, reduce undesirable vibration of the tubing as the tire 12 rotates.

Preferably, the protector 10 is formed of a light weight, yet stable, material. For example, the protector 10 may be formed of rigid nylon polymer, which provides a weight between ten and fifteen grams for the protector 10. The protector 10 is easily installed after the air maintenance tire system 16 has been assembled, requiring no special steps or specialized tools. Likewise, the protector 10 is easy to remove and/or replace, if needed. Advantageously, the protector 10 interfaces with existing components of the air maintenance tire system 16, so that no additional components or adaptations are needed to employ the protector.

The air maintenance tire system component protector 10 of the present invention thus provides protection of the connecting tubes 22 and 28 and the valve housing 26 from debris impacts. In addition, the protector 10 retains the position of the connecting tubes 22 and 28 so that the tubes do not touch other components of the vehicle. By anchoring the connecting tubes 22 and 28 to a streamlined structure that also covers the outboard surface of the valve housing 26, the protector also improves the aesthetic appearance of the connecting tubes and the valve housing.

By covering the connecting tubes 22 and 28, the protector 10 desirably provides protection of the tubes, which may be formed from a polymer, from potentially degrading ultraviolet light. By being light, yet stable, the protector 10 supports the connection of the flexible connecting tubes 22 and 28 to the dome 32, improving the ability of the connecting tubes to withstand the stress created by the cyclic deflection of the tire 12 during rotation. The protector 10 also provides a stable anchor for the connecting tubes 22 and 28 to reduce the vibration of the tubes as the tire 12 rotates. Moreover, by supporting the connecting tubes 22 and 28, the protector 10 desirably increases the life of the connecting tubes, as it reduces potential stress in the tubes, improves the fatigue performance of the tubes and reduces abrasion on the tubes at or near their respective connections to the dome 32 and the valve housing 26.

The present invention also includes a method of protecting components of an air maintenance tire system. The method includes steps in accordance with the description that is presented above and shown in FIGS. 2 through 5.

It is to be understood that the structure of the above-described air maintenance tire system component protector may be altered or rearranged, or components known to those skilled in the art omitted or added, without affecting the overall concept or operation of the invention. For example, the protector 10 may be of a one-piece or a multi-piece construction, and/or may be formed of one material or multiple materials. As an additional example, the flexible member 66 may be formed of a different material than the rest of the protector 10, or from the same material as the rest of the protector.

## Claims

1. An air maintenance tire system comprising a protector, the air maintenance tire system including at least one connecting tube (22) extending between and being in fluid communication with an annular air tube (20) and a valve housing (26), the protector (10) comprising:
a first end (40) disposed proximate the connection of the at least one connecting tube (22) to the annular tube (20);
a second end (42) disposed proximate the valve housing (26); and
a mid-portion (44) disposed between the first and second ends (40, 42), whereby the protector (10) covers an outboard surface of the at least one connecting tube (22).

2. The air maintenance tire system of claim 1, wherein the annular air tube (20) is mounted to a tire (12), a mounting member (32) is secured to a sidewall (34) of the tire (12), the at least one connecting tube (22) is attached to the mounting member (32), and the first end (40) of the protector (10) is secured to the mounting member (32).

3. The air maintenance tire system of claim 1 or 2, wherein the first end (40) of the protector (10) is curved axially inboardly.

4. The air maintenance tire system of claim 2 or 3, wherein the first end (40) of the protector (10) is secured to the mounting member (32) by a mechanical fastener and/or wherein the first end (40) of the protector (10) includes an elastomeric material that engages the mounting member (32).

5. The air maintenance tire system of at least one of the previous claims, wherein the second end (42) of the protector (10) is secured to the valve housing (26).

6. The air maintenance tire system of at least one of the previous claims, wherein an opening (48) is formed in the second end (42) of the protector (10) for receiving a bolt (58) of the valve housing (26), a lip (62) is formed on the inner circumference of the opening (48), and a nut (56) engages the lip (62).

7. The air maintenance tire system of at least one of the previous claims, wherein the second end (42) of the protector (10) is formed with an edge that surrounds a radially inward perimeter edge of an outboard surface of the valve housing (26).

8. The air maintenance tire system of at least one of the previous claims, wherein the protector (10) is formed with a taper extending from the first end to the mid-portion (44), and with a taper extending from the second end (42) to the mid-portion (44).

9. The air maintenance tire system of at least one of the previous claims, wherein the mid-portion (44) includes a flexible member (66), preferably a discrete elastomeric member (66).

10. The air maintenance tire system of at least one of the previous claims, wherein the flexible member (66) is an integrated flexible feature.

11. The air maintenance tire system of at least one of the previous claims, further comprising means for engaging the at least one connecting tube (22).

12. The air maintenance tire system of claim 11, wherein the means for engaging the at least one connecting tube (22) includes a pair of slots (52) formed in a radially inward surface of the first end (40) of the protector (10).

13. The air maintenance tire system of at least one of the previous claims, wherein the means for engaging the at least one connecting tube (22) includes at least one pair of connectors attached to an inboard surface of the connector (10).

14. The air maintenance tire system of at least one of the previous claims, wherein the at least one connecting tube (22) includes a pair of connecting tubes, a first one of the pair of the connecting tubes extending between and being in fluid communication with a first end of the annular air tube (20) and the valve housing (26), and a second one of the pair of the connecting tubes extending between and being in fluid communication with a second end of the annular air tube (20) and the valve housing (26).

15. The air maintenance tire system of at least one of the previous claims, wherein the air maintenance tire system is a valve stem-based air maintenance tire system.
